# EUROPÄISCHE PATENTSCHRIFT

(11) **EP 2 614 974 B1**
(45) Veröffentlichungstag und Bekanntmachung des Hinweises auf die Patenterteilung: **11.09.2019**
(21) Anmeldenummer: 12199707.6
(22) Anmeldetag: 28.12.2012
(51) Int. Cl.: B60J 1/20

(54) **Rollosystem für ein Kraftfahrzeug**
Roller blind system for a motor vehicle
Système de store pour un véhicule automobile

(30) Priorität: 10.01.2012 DE 102012200259
(43) Veröffentlichungstag der Anmeldung: 17.07.2013
(73) Patentinhaber: BOS GmbH & Co. KG, 73760 Ostfildern (DE)
(72) Erfinder: Hansen, Melf, 75053 Gondelsheim (DE); Maier, Matthias, 73733 Esslingen (DE); Celebi, Osman, Nilüfer, Bursa (TR)
(74) Vertreter: Patentanwälte Ruff, Wilhelm, Beier, Dauster & Partner mbB

(56) Entgegenhaltungen:
- DE-A1- 10 248 591
- DE-A1-102012 019 903
- DE-U1-202004 020 095
- JP-A- 2009 126 348
- JP-A- 2010 201 956

## Beschreibung

### Anwendungsgebiet und Stand der Technik

Die Erfindung betrifft ein Abdeckungssystem für eine Kraftfahrzeugscheibe mit einer zwischen einer Stauposition und einer Abdeckungsposition verlagerbaren Abdeckung zur Abdeckung der genannten Scheibe, mit einer Basis mit einem Aufnahmeraum zur Aufnahme der Abdeckung in ihrer Stauposition und einem Austrittspalt zur Verlagerung der Abdeckung in die Abdeckungsposition sowie mit einer Deckeleinheit, die zwischen einer Öffnungsposition und einer Schließposition, in der sie den Austrittsspalt verschließt, verschwenkbar ist.

Die Erfindung betrifft weiterhin auch eine Fahrzeugtür mit einem solchen Abdeckungssystem sowie ein Kraftfahrzeug mit einem solchen Abdeckungssystem.

Gattungsgemäße Abdeckungssysteme sind von am Markt befindlichen Fahrzeugen bekannt. Zur Abdeckung insbesondere der Seitenscheiben ist die Abdeckung solcher Abdeckungssysteme, meist eine Rollobahn, vorgesehen. Sie kann insbesondere dem Sonnenschutz dienen. Wenn die Abdeckung sich in ihrer Stauposition befindet, in welcher sie möglichst von außen nicht erkennbar sein soll, so wird ihr Austrittsspalt bei gattungsgemäßen Abdeckungssystemen durch eine Deckeleinheit verschlossen. Diese Deckeleinheit ist zwischen einem hierfür vorgesehenen Schließzustand und einem Öffnungszustand, in welchem die Abdeckung durch den Austrittsspalt hindurchgeführt ist, verschwenkbar.

Es sind Abdeckungssysteme bekannt, bei denen die Steuerung dieser Schwenkbewegung derart erfolgt, dass die Deckeleinheit mittels einer Federkraft permanent in Richtung ihres Öffnungszustandes beaufschlagt wird und durch Absenken der Abdeckung gegen die Kraft dieser Feder durch eine entsprechend Wirkkopplung in Richtung ihrer Schließposition gedrückt wird.

Ein Abdeckungssystem gemäß dem Oberbegriff des Anspruchs 1 ist aus dem Dokument JP 2009 126348 A bekannt.

Die aus dem Stand der Technik bekannten Deckeleinheiten sind als Kunststoffteile ausgebildet, auf die die jeweils in Richtung der Öffnungsposition bzw. der Stauposition wirkende Kraft unmittelbar wirkt. Dies sowie weitere Einflußfaktoren, wie beispielsweise Temperaturschwankungen, haben bei bekannten Systemen in der Vergangenheit zu Verwindungen der Deckeleinheit geführt, die einem ästhetisch vorteilhaften Schließzustand entgegenstehen. Insbesondere, da die Deckeleinheit je nach Fahrzeugtyp im Falle einer Seitenfensterabdeckung eine Länge von 60cm und mehr haben kann, ist es bei bekannten Abdeckungssystemen gattungsgemäßer Art schwer, über die gesamte Länge im Schließzustand einheitliche Spaltmaße zu gewährleisten.

Um dem Problem Herr zu werden, existieren am Markt Abdeckungssysteme, bei denen die Deckeleinheit beidseitig in Richtung der Schließposition kraftbeaufschlagt wird, indem an beiden Seiten genannte Wirckoppelungen vorgesehen sind. Eine solche Gestaltung bringt jedoch gerade im Bereich von Seitenfenstern Probleme hinsichtlich des zur Verfügung stehenden Bauraums mit sich.

### Aufgabe und Lösung

Aufgabe der Erfindung ist es daher ein gattungsgemäßes Abdeckungssystem dahingehend weiterzubilden, das dieses in der Stauposition der Abdeckung und der Schließposition der Deckeleinheit einen besonders ästhetischen Eindruck hinterlässt.

Erfindungsgemäß wird dies dadurch erzielt, dass die Deckeleinheit eine Blende zur Abdeckung des Austrittsspaltes und mindestens ein drehstarr mit der Blende verbundenes Stabilisierungselement aus einem Material mit gegenüber dem Material der Blende höherem E-Modul, vorzugsweise aus Metall, aufweist, welches um die Schwenkachse schwenkbeweglich an der Basis angelenkt ist.

Bei einem erfindungsgemäßen Abdeckungssystem ist demnach vorgesehen, dass die Deckeleinheit mindestens zweiteilig ausgebildet ist. Sie weist zum einen eine Blende auf, bei welcher es sich um ein Kunststoffteil handelt. Diese Blende bildet mit ihrer Außenfläche jenen Teil der Deckeleinheit, der vom Innenraum des Fahrzeugs aus sichtbar ist, wenn die Deckeleinheit ihre Schließposition einnimmt.

Die zweite Komponente der Deckeleinheit ist ein Stabilisierungselement aus einem Material mit höherer Festigkeit als dem Material der Blende. Dieses Stabilisierungselement ist fest mit der Blende verbunden. Dabei wird unter einer solchen festen Verbindung eine Verbindung verstanden, bei der bestimmungsgemäß keine Relativbewegung möglich ist, wobei dies geringfügige Relativverlagerungen aufgrund von Spiel in zur Verbindung vorgesehenen Kopplungselementen nicht ausschließt.

Das Stabilisierungselement der Deckeleinheit ist jenes Bauteil, welches die Schwenkachse der Deckeleinheit definiert. Um diese Schwenkachse ist die Deckeleinheit gegenüber der Basis verschwenkbar. Als Basis wird dabei die Gesamtheit der Komponenten des Abdeckungssystems verstanden, die bei bestimmungsgemäßer Benutzung ortsfest zur Fahrzeugkarosserie bzw. dem Chassis einer Tür des Fahrzeugs verbleibt. Insbesondere umfasst die Basis den Aufnahmeraum, in der die Abdeckung in ihrer Stauposition angeordnet ist.

Vorzugsweise ist das Stabilisierungselement zumindest abschnittsweise innerhalb der Haupterstreckungsrichtung der Deckeleinheit kreiszylindrisch ausgebildet, so dass diese Abschnitte von Scharniereinrichtungen auf Seiten der Basis zur Erzielung der Schwenkfunktionalität umgriffen werden können.

Als Material für die Blende kommt erfindungsgemäß Kunststoff in Betracht. Da die Stabilität der Deckeleinheit durch das Stabilisierungselement geschaffen wird, kann dabei ein vergleichsweise weicher und/oder kostengünstiger Werkstoff Verwendung finden. Als Material für das Stabilisierungselement kommt insbesondere ein Metall in Betracht, beispielsweise Stahl. Denkbar sind jedoch auch Gestaltungen, bei denen das Stabilisierungselement aus einem Kunststoff mit vergleichsweise hohen E-Modul oder sogar aus einem faserverstärkten Kunststoff besteht, wie beispielsweise aus GFK.

Das Stabilisierungselement dient jedoch nicht ausschließlich als Scharniermittel. Darüber hinaus verleiht es der Deckeleinheit eine hohe Stabilität und wirkt gleichsam als dessen Rückgrat. Erfindungsgemäß erstreckt sich das Stabilisierungselement daher zumindest annähernd über die gesamte Länge (>75%) der Blende. Alternativ zu der Verwendung nur eines Stabilisierungselementes dieser Erstreckung können auch mehrere, vorzugsweise nicht mehr als drei, Stabilisierungselemente vorgesehen sein, die jeweils als Scharniermittel und Stabilisierungsmittel wirken. Diese mehreren Stabilisierungselemente würden in einem solchen Falle in Erstreckungsrichtung der Deckeleinheit hintereinander angeordnet.

Die durch mehrere Stabilisierungselemente gegebene Verwindungsmöglichkeit der Blende zwischen den Stabilisierungselementen ist ausreichend gering, um nicht störend ins Gewicht zu fallen.

Durch das mindestens eine Stabilisierungselement wird erreicht, dass eine Verwindung der Deckeleinheit kein störendes Maß erreicht. Das Stabilisierungselement gestattet darüber hinaus die Verwendung einer dünnwandigeren und damit leichteren Blende, die diese die Stabilität der Deckeleinheit nicht bereitstellen muss.

Die Drehfestigkeit zwischen Stabilisierungselement zum Einen und Blende zum anderen kann über die gesamte Länge der Blende gegeben sein, beispielsweise indem das Stabilisierungselement einen von der Kreisform abweichenden Querschnitt aufweist und in einen hierzu korrespondierenden Aufnahmeschacht an der Blende eingesteckt ist oder indem das Stabilisierungselement über die gesamte Länge mit der Blende durch eine Klebverbindung verbunden ist. Vorzugsweise ist eine drehstarre Verbindung allerdings nur in mehreren Einzelbereichen der Blende gegeben. Diese Einzelbereiche sind vorzugsweise derart verteilt, dass eine drehstarre Kopplung zumindest in im linksseitigen und im rechtsseitigen Endbereich der Blende gegeben ist, wobei unter dem Endbereich ein endseitiger Teilabschnitt der Blende verstanden wird, der sich über 30% der Gesamtlänge der Blende in Haupterstreckungsrichtung erstreckt.

Die Drehfestigkeit kann durch Stoffschluss wie beispielsweise durch eine Klebverbindung erreicht werden. Von Vorteil ist jedoch die Herstellung eines Formschlusses. Hierfür muss das Stabilisierungselement eine zumindest abschnittsweise von einer kreiszylindrischen Form abweichende Gestalt haben.

Auch wenn eine entsprechende Ausgestaltung einer Deckeleinheit bei Abdeckungssystemen verschiedenen Typs verwendbar ist, wird dennoch die Verwendung insbesondere im Zusammenhang mit einem als Rollosystem ausgebildeten Abdeckungssystem als besonders zweckmäßig empfunden. Bei einem solchen Rollosystem wird die Abdeckung durch eine Rollobahn gebildet, welche in der Stauposition auf einer Wickelwelle im Aufnahmeraum aufgewickelt ist und welche in der Abdeckungsposition zumindest partiell von der Wickelwelle abgewickelt ist und sich im Wesentlichen flächenparallel zur abzudeckenden Scheibe erstreckt. Soweit im Weiteren auf ein Rollosystem statt auf ein Abdeckungssystem Bezug genommen wird, sind die entsprechenden Feststellungen auch für ein Abdeckungssystem anderer Art Gegenstand der vorliegenden Erfindung, sofern es sich nicht um offensichtlich lediglich im Hinblick auf ein Rollosystem gültige Feststellungen handelt.

Gerade im Bereich von Fahrzeugtüren, für welche ein erfindungsgemäßes Abdeckungssystem schwerpunktartig vorgesehen ist, ist die Verwendung von Rollosystemen im Hinblick auf den zur Verfügung stehenden Bauraum die beste Möglichkeit zur Realisierung eines gattungsgemäßen Abdeckungssystems.

Das mindestens eine Stabilisierungselement kann als Teil, insbesondere Metallteil, verschiedenster Form vorgesehen sein. Besonders von Vorteil ist jedoch eine Gestaltung, bei der das Stabilisierungselement als Metallstange ausgebildet ist, da eine solche Metallstange hinsichtlich der Fertigung am kostengünstigsten ist. Diese Metallstange kann zur Herstellung einer drehstarren Verbindung mit der Blende abschnittsweise gekröpft oder anderweitig in unrunde Formgebung hinsichtlich der Schwenkachse gebracht werden, um eine formschlüssige Koppelung mit der Blende zu gestatten. Eine Metallstange ist auch deswegen von besonderem Vorteil, da ihre Anbringung an der Blende auf vielfältige Art und einfach möglich ist. So können insbesondere an der aus Kunststoff hergestellten Blende Schnappaufnahmen vorgesehen sein, die zum Verschnappen der Metallstange ausgebildet sind. Auch kann eine einfache bohrungsartige Ausnehmung in der Blende geeignet sein, durch Einschieben eines abgekröpften Endes der Metallstange die drehstarre Verbindung zwischen Metallstange und Blende herzustellen.

Als besonders vorteilhaft wird es angesehen, wenn die Metallstange mindestens einen Hauptabschnitt aufweist, der sich entlang der Schwenkachse erstreckt und welcher mit der Blende verbunden ist, und darüber hinaus mindestens einen gegenüber dem Hauptabschnitt gekröpften oder parallel zum Hauptabschnitt erstreckten Stützabschnitt aufweist, der ebenfalls mit der Blende verbunden ist.

Dadurch, dass der Stützabschnitt gegenüber der Schwenkachse versetzt angeordnet ist und die Blende auch mit diesem Stützabschnitt verbunden ist, wird die gewünschte drehstarre Verbindung auf einfache Art und Weise geschaffen. Der Stützabschnitt kann an einem oder beiden Enden des Hauptabschnitts vorgesehen sein. Es ist jedoch auch möglich, dass der Hauptabschnitt durch einen oder mehrere Stützabschnitte unterbrochen ist. In diesem Falle können endseitige Stützabschnitte entfallen.

Wie für sich genommen aus dem Stand der Technik bereits bekannt, wird es auch bei einem erfindungsgemäßen Abdeckungssystem als vorteilhaft angesehen, wenn die Schwenkposition der Deckeleinheit gegenüber der Basis mechanisch mit der Position der Abdeckung wirkgekoppelt ist.

Dabei ist zur Einleitung eines Schwenkmoments in die Deckeleinheit ein Einleitungsabschnitt vorgesehen, der Teil des Stabilisierungselements ist. Die im Falle bevorzugter Ausgestaltungen eines erfindungsgemäßen Abdeckungssystems in Richtung der Schließposition wirkende Momenteneinkoppelung in die Deckeleinheit durch Verlagerung der Abdeckung wird somit ebenfalls nicht an der Blende, sondern am Stabilisierungselement der Deckeleinheit eingeleitet. Somit werden auch in diesem Zusammenhang Verwindungen der Blende vermieden.

Vorteil des Einleitens des Schwenkmoments in das Stabilisierungselement statt direkt in die Blende ist auch, dass die Erstreckung der Blende üblicherweise durch die Fensteraussparung beschränkt ist. Das Stabilisierungselement, insbesondere in Form einer schmalen Metallstange, kann sich jedoch darüber hinaus erstrecken und gestattet somit eine freiere Festlegung des Ortes der Momenteneinkopplung.

Dies spielt insbesondere eine Rolle im Zusammenhang mit einem Abdeckungssystem, bei dem zwei Führungsschienen beidseitig der Abdeckung vorgesehen sind, entlang derer die Abdeckung geführt ist. Bei solchen ist es durch eine bevorzugte Weiterbildung der Erfindung möglich, das Stabilisierungselement der Deckeleinheit zumindest auf einer Seite an der jeweiligen Führungsschiene vorbei erstreckt auszubilden. Die genannten Führungsschienen können insbesondere vorgesehen sein, um eine am distalen Ende einer Rollobahn oder einer Abdeckung vorgesehene Auszugsstange zu führen. Diese kann dadurch auch motorisch verfahren werden, in dem Antriebsstränge innerhalb der Führungsschiene angeordnet sind. Bei dieser besonderen Weiterbildung ist vorgesehen, dass das Stabilisierungselement sich zumindest auf einer von zwei Seiten über das Ende der Blende hinaus und an der Führungsschiene auf der jeweiligen Seite vorbei erstreckt. Dies ermöglicht es, das Schwenkmoment im Zusammenhang mit der Wirkkoppelung mit der Position der Abdeckung jenseits dieser Führungsschiene in die sich soweit erstreckende Deckeleinheit einzukoppeln. Dies ist von Vorteil, da dadurch die Einkoppelung im hinsichtlich des Bauraums problematischen Bereich der Führungsschiene entfällt. Insbesondere kann die Einkoppelung eines Schwenkmoments wesentlich weiter von der Schwenkachse der Deckeleinheit beabstandet erfolgen.

So wird es als vorteilhaft gesehen, wenn ein Einleitungspunkt am Einleitungsabschnitt, an welchem ein Schwenkmoment in das Stabilisierungselement eingekoppelt wird, mindestens um 5 mm, vorzugsweise mindestens um 10 mm, von der Schwenkachse beabstandet ist. Insbesondere jenseitig der Führungsschiene ist der hierfür erforderliche Bauraum gegeben.

Die vergleichsweise große Beabstandung von 5 mm oder mehr erlaubt es, während der Bewegung der Abdeckung die Deckeleinheit vergleichsweise langsam und dadurch auch leise zwischen ihrer Öffnungsposition und ihrer Schließposition zu verfahren. Demgegenüber sind bei den Gestaltungen des Stands der Technik üblicherweise Beabstandungen zwischen Schwenkachse und Einleitungspunkt von weniger als 2 mm gegeben, die zu einem sehr schnellen und ruckhaften Bewegen der Deckeleinheit führen.

Als besonders vorteilhaft wird es angesehen, wenn mindestens eine Federeinrichtung vorgesehen ist, die permanent ein in der Öffnungsrichtung wirkendes Moment in die Deckeleinheit einkoppelt. Weiterhin ist die Wirkkopplung zwischen der Abdeckung und der Deckeleinheit derart vorgesehen, dass eine Verlagerung der Abdeckung in die Stauposition ein in Schließrichtung und somit der Wirkrichtung dieser Federeinrichtung entgegen gerichtet wirkendes Moment in die Deckeleinheit einkoppelt. Die Federeinrichtungen sind dabei vorzugsweise als Schenkelfedern ausgebildet, die auf das vorzugsweise als Metallstange ausgebildete Stabilisierungselement aufgeschoben sind.

Von besonderem Vorteil ist es, wenn das Abdeckungssystem der beschriebenen Art als Abdeckungssystem für eine Heckscheibe, für eine Frontscheibe oder für eine Seitenscheibe eines Fahrzeugs ausgebildet ist. Die Erfindung umfasst daher auch eine Fahrzeugtür mit einem erfindungsgemäßen Abdeckungssystem.

Gerade im Bereich einer Fahrzeugtür sind die Bauräume zur Aufnahme eines Abdeckungssystems stark begrenzt. Die erfindungsgemäße zweiteilige Gestaltung der Deckeleinheit ist hier von erheblichem Vorteil, insbesondere aufgrund der Möglichkeit, den Einkoppelungsabschnitt in der oben beschriebenen Art jenseits einer Führungsschiene anzuordnen, sowie aufgrund der Tatsache, dass auf eine beidseitige Momentenbeaufschlagung der Deckeleinheit in Schließrichtung verzichtet werden kann.

Gegenstand der Erfindung ist weiterhin noch ein Kraftfahrzeug mit einem erfindungsgemäßen Abdeckungssystem.

### Kurzbeschreibung der Zeichnungen

Weitere Aspekte und Vorteile der Erfindung ergeben sich außer aus den Ansprüchen auch aus der nachfolgenden Beschreibung eines bevorzugten Ausführungsbeispiels der Erfindung, welches anhand der Figuren erläutert wird. Dabei zeigen:
- Fig. 1: ein Ausschnitt aus einem Kraftfahrzeug mit einer heckseitigen Seitentür,
- Fig. 2: ein erfindungsgemäßes Abdeckungssystem, welches in der Fahrzeugtür der Fig. 1 Verwendung findet,
- Fig. 3a und 3b: das linksseitige und das rechtsseitige Ende des Abdeckungssystems der Fig. 2,
- Fig. 4a und 4b: einen Schnitt durch das Abdeckungssystem der Fig. 2 und
- Fig. 5: einen Wirkkopplungsmechanismus zum Verschwenken einer Deckeleinheit des Abdeckungssystems in Reaktion auf eine Verlagerung der Abdeckung.

### Detaillierte Beschreibung der Ausführungsbeispiele

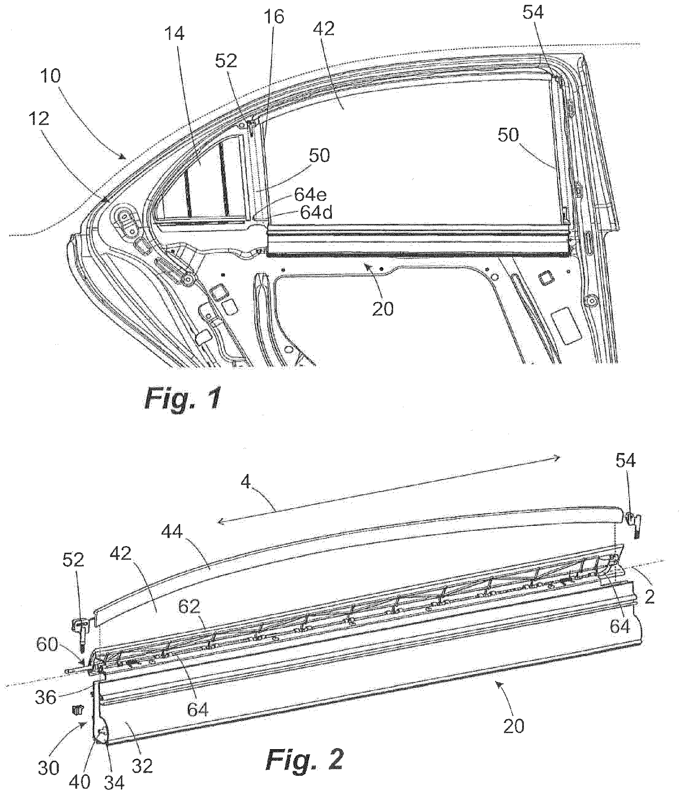

Fig. 1 zeigt einen Ausschnitt aus einem erfindungsgemäßen Kraftfahrzeug 10 mit einer erfindungsgemäßen Seitentür 12. Diese Seitentür weist in an sich üblicher Art und Weise neben einer kleinen Dreiecks-Fensteraussparung 14 eine große Fensteraussparung 16 auf.

Zur Abdeckung der Fensteraussparung 16 ist ein Abdeckungssystem 20 vorgesehen, das insbesondere dem Schutz vor Sonneneinstrahlung dient. Bezugnehmend auf Fig. 1 sowie Fig. 2 umfasst dieses Abdeckungssystem 20 eine ortsfest in der Seitentür 12 vorgesehene Basis 30, die insbesondere eine Rollokassette 32 mit einem Aufnahmeraum 34 umfasst. An ihrem nach oben weisenden Ende ist die Rollokassette 32 mit einem Austrittsspalt 36 versehen.

Innerhalb des Aufnahmeraums 34 ist eine Wickelwelle 40 drehbar angeordnet. Diese Wickelwelle dient zur Aufnahme einer Rollobahn 42, welche zwischen einer weitgehend aufgewickelten Stauposition und einer weitgehend abgewickelten Abdeckungsposition verlagerbar ist. Am distalen Ende dieser Rollobahn 42 ist eine Auszugsstange 44 angebracht.

Wie in Fig. 1 dargestellt ist, sind zur geführten Verlagerung der Auszugsstange 44 und damit zur Überführung der Rollobahn 42 zwischen ihrem Stauzustand und ihrem Abdeckungszustand zwei Führungsschienen 50 vorgesehen, welche sich beidseitig der Fensteraussparung 16 vertikal erstrecken. Innerhalb dieser Führungsschienen sind Gleitelemente 52, 54 geführt, die mit der Auszugsstange 44 verbunden sind. Diese Gleitelemente 52, 54 können mit Hilfe von Antriebssträngen entlang der Führungsschienen 50 verlagert werden.

Um den Austrittsspalt 36 der in Fig. 2 dargestellt ist, möglichst gut zu kaschieren, wenn die Rollobahn weitgehend vollständig aufgewickelt und die Auszugsstange 44 in der Rollokassette 32 angeordnet ist, ist eine Deckeleinheit 60 vorgesehen. Diese Deckeleinheit 60 ist um eine in Haupterstreckungsrichtung ausgerichtete Schwenkachse 2 schwenkbar an der Basis angelenkt und um etwa 70° verschwenkbar, um den Austrittsspalt 36 fallweise zu verschließen oder freizugeben. Die Deckeleinheit 60 besteht aus einer Kunststoffblende 62, deren Länge in etwa der Länger der Haupt-Fensteraussparung 16 entspricht. Zweite Komponente der Deckeleinheit 60 ist ein Stabilisierungselement 64 in Form einer Metallstange 64. Dieses Stabilisierungselement 64 erstreckt sich annähernd über die gesamte Länge der Blende 62. Statt Metall kommt beim Stabilisierungselement 64 auch besonders fester Kunststoff in Betracht.

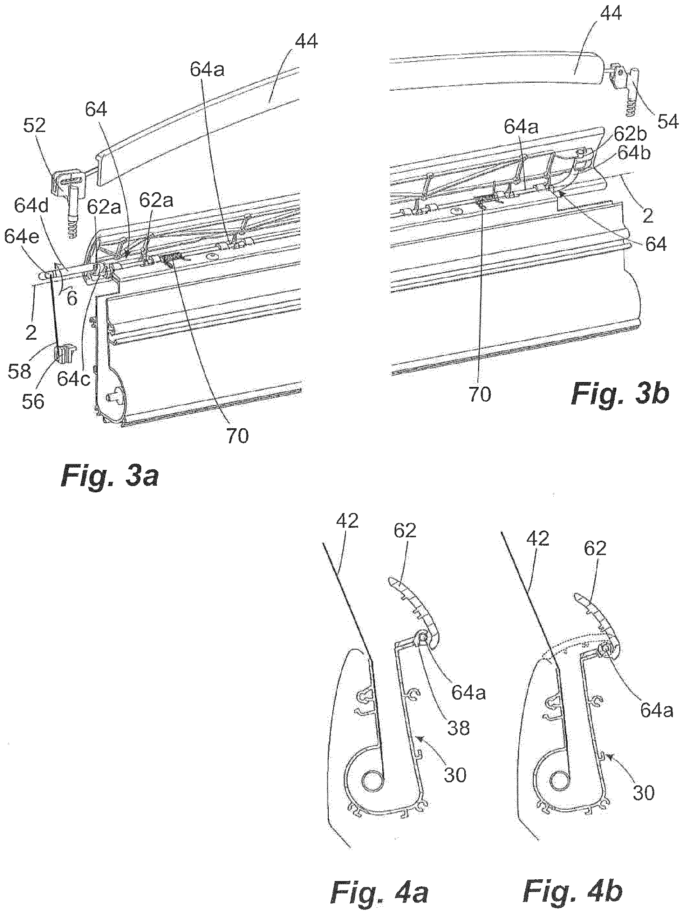

Den Fig. 3a, 3b, 4a, 4b ist die Anordnung und Formgebung der Metallstange 64 im Detail zu entnehmen. Entlang des überwiegenden Teils der Länge der Blende 62 in Haupterstreckungsrichtung 4 erstreckt sich ein Hauptabschnitt 64a der Metallstange 64. Dieser definiert die Schwenkachse 2, da dieser Hauptabschnitt 64a in der in Fig. 4a verdeutlichten Weise in Schnapplager 38 der Basis 30 eingeschnappt ist. Auf Seiten der Deckeleinheit 60 ist der Hauptabschnitt 64a der Metallstange 64 ebenfalls in Schnapplager 62a eingeschnappt oder in der in Fig. 4b verdeutlichten Weise sogar von der aus Kunststoff gefertigten Blende 62 vorständig umgeben. Das rechtsseitige Ende der Metallstange 64 wird durch einen abgekröpften Teil 64b gebildet, der in einer Ausnehmung 62b der Blende 62 hineinragt. Somit ist hierdurch am rechten Ende der Deckeleinheit 60 eine drehstarre Verbindung zwischen der Metallstange 64 und der Blende 62 geschaffen. Am gegenüberliegenden linkseitigen Ende ist eine doppelte Abkröpfung 64c vorgesehen, durch die ein angrenzender Abschnitt 64d gegenüber der Schwenkachse 2 parallel versetzt ist. Da auch dieser Abschnitt 64d durch Schnapplager 62a der Blende 62 gehalten ist, ist somit auch am linksseitigen Ende der Deckeleinheit 60 eine drehstarre Verbindung zwischen der Metallstange 64 und der Blende 62 geschaffen.

Am Abschnitt 64d, dessen weiterer Zweck im weiteren noch erläutert wird, schließt sich wiederum ein im 90°-Winkel abgekröpfter Abschnitt 64e an, welcher, wie im weiteren noch erläutert wird, einen Momenteneinleitungsabschnitt 64e bildet.

Im Bereich des Hauptabschnitts 64a sind über die Gesamtlänge der Blende 62 mehrere Schenkelfedern 70 vorgesehen, die auf die Metallstange 64 aufgeschoben sind. Diese wirken zwischen der Blende 62 und der Basis 30 und führen zu einer permanenten Momentenbeaufschlagung der Deckeleinheit 60 in Richtung des Pfeils 6, also in Öffnungsrichtung. Wenn kein entsprechendes Gegenmoment auf die Deckeleinheit 60 wirkt, nimmt diese somit ihre Öffnungsposition ein. Zur Erzielung der Schließposition, die in Fig. 4b gestrichelt dargestellt ist, ist ein drittes Gleitelement 56 vorgesehen, welches in der gleichen Führungsschiene 50 wie das Gleitelement 52 angeordnet ist. Zwischen diesem dritten Gleitelement 56 und der Deckeleinheit 60 ist eine Wirkkopplung dadurch hergestellt, dass ein Verbindungsglied 58 einerseits am dritten Gleitelement 56 und andererseits am Momenteneinkopplungsabschnitt 64e der Metallstange 64 befestigt ist. Es kann sich um ein starres Verbindungsglied handeln. Fallweise kann hier jedoch auch die Verwendung eines elastischen Verbindungsmittel wie beispielsweise einer Schraubenfeder von Vorteil sein.

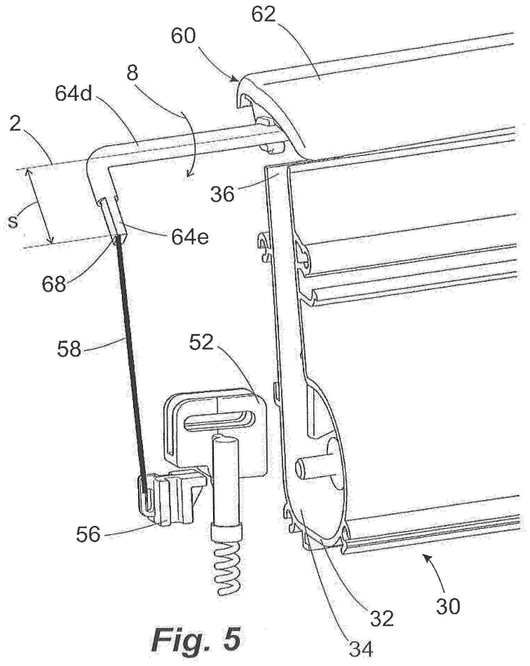

Wenn die Abdeckung in ihre Stauposition verbracht wird, indem die Auszugsstange 44 mittels der Gleitelemente 52, 54 nach unten verfahren wird, so kommt gegen Ende dieser Bewegung das Gleitelement 52 mit dem dritten Gleitelement 56 in Berührkontakt und drückt dieses über eine geringe Teilstrecke und mittelbar gegen die Kraft der Schenkelfedern 70 mit nach unten. Dies ist durch Fig. 5 verdeutlicht. Diese Verlagerung des dritten Gleitelements 56 nach unten führt aufgrund des Verbindungselements 58 zu einer Momenteneinkoppelung und damit zu einem Verschwenken der Metallstange 64 in Richtung des Pfeils 8. Gemeinsam mit der Metallstange 64 wird dabei die gesamte Deckeleinheit 60 verschwenkt. Da die Blende 62 an ihren beiden gegenüberliegenden Enden mit der in sich kaum tordierbare Metallstange 64 drehstarr gekoppelt ist, kommt es somit auch zu einem sehr gleichmäßigen Verschwenken der Blende 62 in ihre Schließposition.

Hinsichtlich dieser Wirkkoppelung liegt eine besondere Vorteilhaftigkeit darin, dass die Metallstange 64 mittels des Abschnitts 64d eine Anordnung des Momenteneinkopplungsabschnitts 64e deutlich jenseits des rechtsseitigen Endes der Blende 62 gestattet. In der in der Fig. 1 und der Fig. 3a verdeutlichten Weise führt dies dazu, dass der Momenteneinkopplungsabschnitt 64 jenseits der Führungsschiene 50 angeordnet ist. Hierdurch kann ein vergleichsweise großer Abstand s von etwa 15 mm zwischen der Schwenkachse 2 und dem Momenteneinkopplungspunkt 68 erzielt werden. Ein langsames und auch leises Verschwenken der Deckeleinheit 60 wird hierdurch erzielt.

## Patentansprüche

1. Abdeckungssystem (20) für eine Kraftfahrzeugscheibe mit
- einer zwischen einer Stauposition und einer Abdeckungsposition verlagerbaren Abdeckung (42),
- einer Basis (30) mit einem Aufnahmeraum (34) zur Aufnahme der Abdeckung (42) in ihrer Stauposition und einem Austrittsspalt (36) zur Verlagerung der Abdeckung (42) in die Abdeckungsposition und
- einer Deckeleinheit (60), die zwischen einer Öffnungsposition und einer Schließposition, in der sie den Austrittsspalt (36) verschließt, verschwenkbar ist,
wobei
die Deckeleinheit (60)
- eine Blende (62) aus Kunststoff zur Abdeckung des Austrittsspaltes (36) und
- mindestens ein drehstarr mit der Blende verbundenes Stabilisierungselement (64) aus einem Material mit gegenüber dem Material der Blende höherem E-Modul aufweist, welches
- sich zumindest über 75% der Länge der Blende (62) erstreckt und
- als Scharniermittel dient und hierfür um die Schwenkachse (2) schwenkbeweglich an der Basis (30) angelenkt ist,
**dadurch gekennzeichnet, dass**
die Schwenkposition der Deckeleinheit (60) gegenüber der Basis (30) mechanisch mit der Position der Abdeckung (42) wirkgekoppelt ist, wobei zur Einleitung eines Schwenkmoments in die Deckeleinheit (62) ein Einleitungsabschnitt (64e) vorgesehen ist, der Teil des Stabilisierungselements (64) ist.

2. Abdeckungssystem (20) nach Anspruch 1,
**dadurch gekennzeichnet, dass**
das Abdeckungssystem (20) als Rollosystem (20) ausgebildet ist, dessen Abdeckung (42) durch eine Rollobahn (42) gebildet ist, welche in der Stauposition auf einer Wickelwelle (40) im Aufnahmeraum (34) aufgewickelt ist und welche in der Abdeckungsposition zumindest partiell von der Wickelwelle (40) abgewickelt ist.

3. Abdeckungssystem (20) nach Anspruch 1 oder 2,
**dadurch gekennzeichnet, dass**
das Stabilisierungselement (64) als Metallstange (64) ausgebildet ist.

4. Abdeckungssystem (20) nach Anspruch 3,
**dadurch gekennzeichnet, dass**
die Metallstange (64)
- einen Hauptabschnitt (64a) aufweist, der sich entlang der Schwenkachse (2) erstreckt und welcher mit der Blende (62) verbunden ist, und
- mindestens einen gegenüber dem Hauptabschnitt (64a) gekröpften oder parallel zum Hauptabschnitt erstreckten Stützabschnitt (64b, 64d) aufweist, der ebenfalls mit der Blende (62) verbunden ist.

5. Abdeckungssystem nach Anspruch 1,
**dadurch gekennzeichnet, dass**
zwei Führungsschienen (50) beidseitig der Abdeckung (42) in ihrer Abdeckungsposition vorgesehen sind, entlang derer die Abdeckung (42) geführt ist, wobei das Stabilisierungselement (64) der Deckeleinheit (60) sich zumindest auf einer Seite an der jeweiligen Führungsschiene (50) vorbei erstreckt.

6. Abdeckungssystem nach Anspruch 1 oder 5,
**dadurch gekennzeichnet, dass**
ein Einleitungspunkt (68) am Einleitungsabschnitt (64e), an welchem ein Schwenkmoment in das Stabilisierungselement (64) aufgrund einer Verlagerung der Abdeckung (42) eingekoppelt wird, mindestens um 5 mm, vorzugsweise mindestens um 10 mm, von der Schwenkachse (2) beabstandet ist.

7. Abdeckungssystem (20) nach einem der Ansprüche 1 oder 5 oder 6,
**dadurch gekennzeichnet, dass**
- mindestens eine Federeinrichtung (70) vorgesehen ist, die permanent ein in Öffnungsrichtung (6) wirkendes Moment in die Deckeleinheit (60) einkoppelt und
- die Wirkkopplung zwischen der Abdeckung (42) und der Deckeleinheit (60) derart vorgesehen ist, dass eine Verlagerung der Abdeckung (42) in die Stauposition ein in Schließrichtung (8) wirkendes Moment in die Deckeleinheit (62) einkoppelt.

8. Abdeckungssystem nach einem der vorstehenden Ansprüche,
**dadurch gekennzeichnet, dass**
das Abdeckungssystem (20) als Abdeckungssystem (20) für eine Heckscheibe oder eine Seitenscheibe eines Fahrzeugs ausgebildet ist.

9. Fahrzeugtür (12) mit einem Abdeckungssystem (20) zur Abdeckung einer Seitenscheibe,
**dadurch gekennzeichnet, dass**
das Abdeckungssystem (20) nach einem der vorstehenden Ansprüche ausgebildet ist.

10. Kraftfahrzeug (10) mit einem Abdeckungssystem (20) zur Abdeckung einer Seitenscheibe, einer Frontscheibe oder einer Heckscheibe,
**dadurch gekennzeichnet, dass**
das Abdeckungssystem (20) nach einem der vorstehenden Ansprüche ausgebildet ist.

## Claims

1. Covering system (20) for a motor vehicle window, comprising
- a cover (42) displaceable between a stowed position and a covering position,
- a base (30) including an accommodation space (34) for accommodating the cover (42) in its stowed position and an outlet gap (36) for displacement of the cover (42) to the covering position, and
- a lid unit (60) pivotable between an opened position and a closed position, in which latter position the lid closes the outlet gap (36),
wherein the lid unit (60) includes
- a strip (62) made of synthetic material for covering the outlet gap (36), and
- at least one stabilisation member (64) made of a material exhibiting a higher modulus of elasticity than the material of the strip and connected to the strip in a torsionally rigid manner, which stabilisation member
- extends at least over 75 % of the length of the strip (62), and
- serves as a hinge means and for that purpose is articulated on the base (30) pivotable about the pivot axis (2),
**characterized in that**
the pivoted position of the lid unit (60) relative to the base (30) is mechanically operatively coupled to the position of the cover (42), wherein for introducing a pivot moment into the lid unit (60) an introduction portion (64e) is provided, which portion is part of the stabilisation member (64).

2. Covering system (20) according to claim 1, **characterized in that** the covering system (20) is a roller blind system (20), with the cover (42) thereof formed by a roller blind web (42) which in the stowed position is wound up on a winding shaft (40) in the accommodation space (34) and which in the covering position is wound off from the winding shaft (40) at least partially.

3. Covering system (20) according to claim 1 or 2, **characterized in that** the stabilisation member (64) is a metal rod (64).

4. Covering system (20) according to claim 3, **characterized in that** the metal rod (64)
- has a main portion (64a) extending along the pivot axis (2) and connected to the strip (62), and
- has at least one support portion (64b, 64d) cranked in relation to the main portion (64a) or extending in parallel to the main portion, which support portion is likewise connected to the strip (62).

5. Covering system according to claim 1, **characterized in that** two guide rails (50) are provided on both sides of the cover (42) in its covering position, along which rails the cover (42) is guided, wherein the stabilisation member (64) of the lid unit (60) extends at least on one side past the respective guide rail (50).

6. Covering system according to claim 1 or 5, **characterized in that** an introduction point (68) on the introduction portion (64e), where a pivot moment is coupled into the stabilisation member (64) due to displacing the cover (42), is spaced from the pivot axis (2) at least 5 mm, preferably at least 10 mm.

7. Covering system (20) according to any of claims 1 or 5 or 6, **characterized in that**
- at least one spring device (70) is provided, which permanently couples a momentum acting in the opening direction (6) into the lid unit (60), and
- the operative coupling between the cover (42) and the lid unit (60) is provided in such a manner that by displacing the cover (42) to the stowed position, a momentum acting in the closing direction (8) is coupled into the lid unit (60).

8. Covering system according to any of the preceding claims, **characterized in that** the covering system (20) is a covering system (20) for a rear window or a side window of a vehicle.

9. Vehicle door (12) having a covering system (20) for covering a side window, **characterized in that** the covering system (20) is designed according to any of the preceding claims.

10. Motor vehicle (10) having a covering system (20) for covering a side window, a front window or a rear window, **characterized in that** the covering system (20) is designed according to any of the preceding claims.

## Revendications

1. Système de couverture (20) pour une vitre d'un véhicule automobile avec
- une couverture (42) déplaçable entre une position rangée et une position couvrant,
- une base (30) avec un espace de logement (34) pour le logement de la couverture (42) dans sa position rangée et une fente de sortie (36) pour le déplacement de la couverture (42) vers la position couvrant et
- une unité de couvercle (60) pivotante entre une position ouverte et une position fermée où le couvercle ferme la fente de sortie (36),
dans lequel l'unité de couvercle (60) présente
- un bandeau (62) en matière synthétique pour recouvrir la fente de sortie (36) et
- au moins un élément de stabilisation (64) connecté au bandeau de manière rigide en torsion et d'un matériau présentant un module d'élasticité supérieur à celui du matériau du bandeau, l'élément de stabilisation
- s'étendant au moins sur 75 % de la longueur du bandeau (62) et
- servant de moyen de charnière et à cet effet étant articulé à la base (30) pivotant autour de l'axe de pivotement (2),
**caractérisé en ce que**
la position de pivotement de l'unité de couvercle (60) par rapport à la base (30) est couplée fonctionnellement mécaniquement à la position de la couverture (42), dans lequel pour l'introduction d'un moment de pivotement dans l'unité de couvercle (60) une section d'introduction (64e) est prévue et fait partie de l'élément de stabilisation (64).

2. Système de couverture (20) selon la revendication 1, **caractérisé en ce que** le système de couverture (20) est sous forme d'un système de store (20), la couverture (42) duquel est formée par une toile de store (42), qui est enroulée sur un arbre d'enroulement (40) dans l'espace de logement (34) dans la position rangée et qui est déroulée de l'arbre d'enroulement (40) au moins partiellement dans la position couvrant.

3. Système de couverture (20) selon la revendication 1 ou 2, **caractérisé en ce que** l'élément de stabilisation (64) est sous forme de tige métallique (64).

4. Système de couverture (20) selon la revendication 3, **caractérisé en ce que** la tige métallique (64) présente
- une section principale (64a) s'étendant le long de l'axe de pivotement (2) et étant connectée au bandeau (62) et
- au moins une section de support (64b, 64d) coudée par rapport à la section principale (64a) ou s'étendant parallèlement à la section principale, la section de support de même étant connectée au bandeau (62).

5. Système de couverture selon la revendication 1, **caractérisé en ce que** deux rails de guidage (50) sont prévus des deux côtés de la couverture (42) dans sa position couvrant, le long desquels la couverture (42) est guidée, l'élément de stabilisation (64) de l'unité de couvercle (60) au moins d'un côté s'étendant en passant le rail de guidage (50) respectif.

6. Système de couverture selon la revendication 1 ou 5, **caractérisé en ce que** un point d'introduction (68) sur la section d'introduction (64e), où un moment de pivotement soit couplé dans l'élément de stabilisation (64) à cause d'un déplacement de la couverture (42), est espacé d'au moins 5 mm, de préférence d'au moins 10 mm, de l'axe de pivotement (2).

7. Système de couverture (20) selon l'une quelconque des revendications 1 ou 5 ou 6, **caractérisé en ce que**
- au moins un dispositif de ressort (70) est prévu, couplant en permanence un moment agissant dans la direction d'ouverture (6) dans l'unité de couvercle (60) et
- le couplage fonctionnel entre la couverture (42) et l'unité de couvercle (60) est prévu de telle manière qu'en déplaçant la couverture (42) vers la position rangée un moment agissant dans la direction de fermeture (8) soit couplé dans l'unité de couvercle (60).

8. Système de couverture selon l'une quelconque des revendications précédentes, **caractérisé en ce que** le système de couverture (20) est sous forme de système de couverture (20) pour une vitre arrière ou une vitre latérale d'un véhicule.

9. Porte de véhicule (12) avec un système de couverture (20) pour recouvrir une vitre latérale, **caractérisée en ce que** le système de couverture (20) est configuré selon l'une quelconque des revendications précédentes.

10. Véhicule automobile (10) avec un système de couverture (20) pour recouvrir une vitre latérale, une vitre frontale ou une vitre arrière, **caractérisé en ce que** le système de couverture (20) est configuré selon l'une quelconque des revendications précédentes.
